# EUROPÄISCHE PATENTSCHRIFT

(11) **EP 0 992 629 B1**
(45) Veröffentlichungstag und Bekanntmachung des Hinweises auf die Patenterteilung: **01.12.2004**
(21) Anmeldenummer: 99119492.9
(22) Anmeldetag: 30.09.1999
(51) Int. Cl.: E01H 11/00

(54) **Vorrichtung zum mechanischen Abtragen von Wildkraut**
Apparatus for the mechanical removal of weeds
Dispositif pour enlever mécaniquement des mauvaises herbes

(30) Priorität: 09.10.1998 DE 29818113 U; 24.10.1998 DE 19849053; 04.12.1998 DE 19855986
(43) Veröffentlichungstag der Anmeldung: 12.04.2000
(73) Patentinhaber: Reiners, Christa, 41812 Erkelenz (DE)
(72) Erfinder: Reiners, Christa, 41812 Erkelenz (DE)
(74) Vertreter: von Creytz, Dietrich, Dipl.-Phys.

(56) Entgegenhaltungen:
- EP-A- 0 692 577
- WO-A-92/10614
- US-A- 3 045 267

## Beschreibung

Die Erfindung betrifft eine Vorrichtung zum mechanischen Abtragen von Wildkraut von befestigten Bodenflächen, wie Wegen, Straßen, Plätzen oder Rinnen, mit mindestens einem um eine etwa vertikale Werkzeugwelle rotierend auf die Bodenfläche einwirkenden Arbeitswerkzeug. Die Erfindung besteht vorzugsweise darin, daß das Arbeitswerkzeug durch Ausnutzung der Fliehkraft relativ zur Bodenfläche positioniert ist. Hierbei kann beispielsweise das Arbeitswerkzeug auf einem Träger gelagert werden, der um die etwa vertikale, nach unten gerichtete Werkzeugwelle rotierbar ist. Vorzugsweise soll das Arbeitswerkzeug in Bezug auf die Werkzeugwelle bzw. in Bezug auf den Träger auf einer etwa horizontalen Kippachse schwenkbar gelagert werden. Der Schwenkwinkel des Arbeitswerkzeugs um die Kippachse und damit die Position relativ zur gegen bearbeitenden Fläche, ist dann abhängig von einer Zentrifugalkraft, die wiederum von der Umdrehungsgeschwindigkeit der Werkzeugwelle abhängt.

Unter dem Begriff "befestigte Flächen" werden im vorliegenden Zusammenhang unter anderem gepflasterte, asphaltierte, betonierte, plattierte, wassergebundene oder dergleichen befestigte Flächentypen (mit oder ohne Kantstein oder dergleichen Berandung) verstanden, die beispielsweise als Fußweg, Fahrradweg und/oder Autostraße bzw. als Zierfläche oder Parkplatz vorgesehen sind. Wildkraut" bezeichnet die Gesamtheit der Pflanzen, die herkömmlich Unkraut genannt werden. Es liegt im Rahmen der Erfindung, auch den auf der befestigten Fläche angesammelten Nährboden des Wildkrauts mit Hilfe der Vorrichtung zu entfernen. Die Vorrichtung soll also zum Fegen geeignet sein. Eine typische Fegemaschine, welche zum Entfernen im Boden wurzelnden Wildkrauts nicht vorgesehen oder geeignet ist, wird in WO 92/10614 offenbart.

Wenn befestigte Flächen der beschriebenen Art nicht regelmäßig bzw. nicht an allen Stellen stark von Fahrzeugen oder Fußgängern benutzt werden, gelingt es Wildkraut, sich von den Flächenrändern, z.B. vom Rinnstein, her oder aus Fugen heraus über die Fläche auszubreiten. Das wird besonders deutlich auf Fuß- und Fahrradwegen, die zwar auf einem Mittelstreifen durch den Verkehr sauber gehalten werden, aber von den Wegrändern her unterstützt durch Ansammlung von Nährboden allmählich zuwachsen.

Um aufwendige mechanische Handarbeit einzusparen, sind Maschinen mit Walzenwerkzeugen, z.B. mit rotierenden Besenwalzen, Zopf- oder Tellerbesen (mit Stahlborsten) in der Praxis eingesetzt worden. Eine solche Bearbeitungsmaschine zur Wildkrautbeseitigung mit etwa horizontaler Werkzeugwelle wird in DE 3818645 A1 beschrieben. Diese Vorrichtung weist um die (horizontale) Werkzeugwelle - über Länge und Umfang verteilt - nach außen gerichtete, relativ dünne, elastische Zinken auf. Die bekannte Maschine ist zur Bearbeitung von Flächen aus Sand, Kies, Schlacke oder dergleichen vorgesehen. Sie dient neben der Wildkrautbeseitigung zugleich einer Auflockerung des Bodens, um dessen Elastizität zu erhöhen.

In DE 195 02 010 A1 wird ein Gerät zum Entfernen von Wildkrautbewuchs auf Straßen und Wegen beschrieben. Dieses verfahrbare Gerät besitzt mindestens ein quer zur Fahrtrichtung hin- und herbewegtes Bauteil mit auf den Boden gerichteten Bürstelementen, welches beim Betrieb gegen den Boden zu drücken ist. Die einzelnen Bürstelemente können in ihrer Höhe relativ zum Boden verlagerbar gehaltert werden. Sie können auch pendelnd aufgehängt werden. In jedem Fall muß die Befestigung der einzelnen Bürstelemente der Form des Bodens ständig angepaßt werden. Auch die Andrückkraft der Elemente muß permanent - geregelt nach Augenschein - dem Arbeitsziel und -ergebnis entsprechend angepaßt werden.

Eine weitere Vorrichtung zum Abkehren von befestigten Flächen, die mit Wildkräutern bewachsen sind, wird in EP 0 692 577 A1 beschrieben. Diese Vorrichtung umfaßt eine Bürsteinrichtung mit einem Tellerbesen. Der Tellerbesen wird motorisch in Rotation versetzt und so ausgerichtet, daß er die verkrauteten Flächen abbürstet. Er besitzt eine Vielzahl von Kehrbüscheln (Reinigungsborsten), die in bestimmten Winkelstellungen in Bezug auf die Drehachse des Besens arretierbar sind. Die Winkelstellung wird der jeweiligen Einsatzaufgabe entsprechend über eine Spindel oder einen Hydraulikzylinder oder eine sonstige Verstelleinrichtung fixiert. Der Druck, mit dem der Tellerbesen gegen die zu reinigende Fläche zu rücken ist, muß - ganz ähnlich wie bei den vorgenannten Geräten - mit Hilfe zusätzlicher mechanischer oder hydraulischer Einrichtungen aufgebracht werden.

Der Antrieb der bekannten gegen den Boden gedrückten Walzenbesen erfordert eine erhebliche Leistung. Die Walzenbesen müssen nämlich (wenn ihre Arbeit erfolgreich sein soll), mit relativ großer Kraft, beispielsweise unter Verwendung einer Hydraulik oder Mechanik, gegen die zu reinigende Bodenfläche gedrückt werden. Das Andrücken hat aber den Nachteil, daß die Werkzeuge eine zu reinigende Bodenfläche aus Kunststeinen, Platten, Asphalt oder Beton aufrauhen. Das führt nach Regenfällen zur späteren Moosbildung und damit zu Glätte und Rutschgefahr. Außerdem werden in der Bodenfläche vorhandene Fugen oder Risse durch die Werkzeuge ausgekehrt, unnötig aufgeweitet und die einzelnen Steine dadurch gelockert. Bei der ständigen Bearbeitung von Natur- und Betonsteinpflasterflächen werden die Weich- bzw. Feinanteile des Pflasters ausgekratzt, so daß schließlich eine schartig unebene Pflasteroberfläche mit den vorgenannten Nachteilen entsteht.

In der DE-PS 327 329 wird eine umlaufende Bürste mit auswechselbaren Metallzinken beschrieben, bei welcher die Zinken radial zur Bürstenachse aufgehängt sind. Die Befestigung der Zinken erfolgt derart, daß sie gleichzeitig radiales Spiel zum Vor- bzw. Zurücktreten bei zu starkem Widerstand der gebürsteten Fläche haben. Um einen besonders guten Bürsterfolg zu erzielen, sollen die Zinken nicht radial, sondern derart angeordnet werden, daß die am Umfang des Bürstenkörpers aufgehängten Zinken um ihren Aufhängepunkt aus der axialen Richtung bis in radialer Richtung hin schwenkbar sind. Im Bekannten handelt es sich um eine Bürste, die mit Hilfe eines gesonderten Andrückmittels, z.B. auch von Hand, gegen das zu behandelnde Werkstück zu drücken ist. Wenn man das bekannte Gerät zum mechanischen Abtragen von Wildkraut von befestigten Bodenflächen einsetzen wollte, müßte man es permanent, wie ein Handgerät, auf die verkrauteten Bereiche richten und die Andrückkraft ständig nach Beobachtung mit dem Auge regeln. Letztlich kann auch hierbei eine Aufrauhung der bearbeiteten Fläche nicht ausgeschlossen werden.

Schließlich beschreibt US 30 45 267A eine Maschine zum Reinigen von Bodenflächen mit Hilfe eines rotierenden Bürstenpaars. Die Bürsten werden über einarmige Schwenkhebel an horizontalen Achsen gelagert. Die Achsen werden an einer horizontalen Platte befestigt, welche mit einer vertikalen, angetriebenen Welle verbunden ist. Nach den Angaben in dieser Patentschrift werden die Bürsten durch die bei der Rotation auf sie einwirkende Zentrifugalkraft gegen den Boden gedrückt. Mit zunehmender Umdrehungszahl nimmt die Anpreßkraft zu. Die durch die höhere Umdrehungszahl angestrebte verbesserte Wildkrautbeseitigung, wird also mit einer verstärkten Aufrauhung des Bodens erkauft.

Der Erfindung liegt die Aufgabe zugrunde, eine mechanische Reinigungsvorrichtung zu schaffen, die ein Aufrauhen der befestigten Fläche praktisch nicht hervorruft, aber ein Abschlagen der jeweils unerwünschten Wildkräuter bis an die Wurzel gewährleistet. Vorzugsweise soll sich die Reinigungswirkung bis in die Kanten bzw. Fugen eines Rinnsteins hinein erstrecken können.

Die erfindungsgemäße Lösung wird für die eingangs genannte Vorrichtung im Kennzeichen des Anspruchs 1 angegeben. Einige Verbesserungen und weitere Ausgestaltungen der Erfindung werden in den Unteransprüchen beschrieben.

Als Mittel zum Positionieren des jeweiligen Arbeitswerkzeugs relativ zur Bodenfläche wird im Rahmen der Erfindung die Fliehkraft herangezogen. Hierbei wird es bevorzugt, wenn die Fliehkraft nicht zum Absenken, sondern eher zum leichten Lüften des Werkzeugs genutzt wird, so daß letzteres tangential, z.B. praktisch ohne Bodenberührung, gewissermaßen streichend, über die Bodenfläche gleitet und, ohne diese aufzurauhen, die Wildkräuter an der Wurzel abschlägt bzw. absichelt. Die Arbeitsgeräusche sind erstaunlich gering, da die Arbeitswerkzeuge die Bodenfläche praktisch nicht berühren und man im wesentlichen nur den Motor hört.

Erfindungsgemäß soll jedes - insbesondere auf einer (horizontalen) Kippachse schwenkbar befestigte - Arbeitswerkzeug selbst als der Fliehkraft unterworfener Doppelhebel ausgebildet werden. In diesem Sinne besteht eine bevorzugte Lösung darin, daß mindestens zwei auf je einer etwa horizontalen Kippachse schwenkbar gelagerte Arbeitswerkzeuge, z.B. ausgebildet wie Stielbürsten, vorgesehen sowie insgesamt so gewuchtet werden, daß jedes einen Doppelhebel bildende Arbeitswerkzeug durch seine Kippachse in einen Borstenarm bzw. -schenkel einerseits und in einen vorzugsweise leichteren Gewichtsarm bzw. -schenkel andererseits unterteilt ist.

Durch Wahl der Gewichtsverteilung von Gewichts- und Borstenarmen des einzelnen Arbeitswerkzeugs soll dessen von der Umdrehungszahl der Werkzeugwelle abhängige Position relativ zum an den Boden vorzugsweise derart vorbestimmt werden, daß sich das Werkzeugarbeitsende im wesentlichen parallel bzw. tangential zur Bodenfläche bewegt. Diese annähernd tangential zur Oberfläche des Bodens gerichtete Bewegung hat zur Folge, daß eine Aufrauhung der Bodenfläche praktisch nicht eintritt. Die hohe Geschwindigkeit, mit der die Arbeitswerkzeuge am Boden entlang gleiten bewirkt aber, daß alle Wildkräuter bis an die Wurzel - also bis auf einen momentan praktisch unsichtbaren Rest - abgetrennt werden. Übrigens, wenn sich auf der jeweiligen Bodenfläche auch Erdboden angesammelt hat, wird auch dieser - gegebenenfalls zusammen mit den Wildkrautwurzeln - abgeräumt.

Dieses erstaunliche Ergebnis kann bei einem Arbeitswerkzeug, das als Doppelhebel mit etwa horizontaler Kippachse aus einem Borstenarm und einem Gewichtsarm besteht, überraschenderweise vor allem dadurch erreicht werden, daß der Borstenarm schwerer als der Gewichtsarm ist. Der Borstenarm dieses Arbeitswerkzeugs liegt dann also bei ruhender Werkzeugwelle auf dem Boden auf, es sei denn, es werden Zusatzmittel zum Abheben des Borstenarms vom Boden auch in der Ruhestellung vorgesehen. Wegen der austarierten Gewichtsverteilung von Gewichts- und Borstenarm eines solchen Arbeitswerkzeugs nimmt die Anlagekraft des relativ schweren Borstenarms mit zunehmender Umdrehungszahl der Werkzeugwelle ab. In dem Maße also, in dem das Werkzeug wegen seiner höheren Umdrehungszahl das Wildkraut besser abtrennt, verursacht es weniger Schaden an der Oberfläche des bearbeiteten Bodens. Ein entscheidender Vorteil der erfindungsgemäßen Lösung besteht also darin, daß die unerwünschte Aufrauhung des Bodens mit zunehmender Umdrehungszahl - also bei verbesserter Wildkrautbeseitigung - abnimmt.

Im Rahmen der Erfindung kann das Arbeitswerkzeug mit der genannten Gewichtsverteilung schwenkbar um eine horizontale Kippachse gelagert werden. Das schließt unter anderem zwei Alternativen ein: Einmal ist es möglich, das Werkzeug - gegebenenfalls nach dem Austarieren der genannten Gewichtsverteilung - in radialer Richtung unbeweglich auf der Kippachse zu arretieren. Statt dessen kann das Werkzeug als gegen eine elastische Rückstellkraft radial beweglich in bezug auf die Kippachse auf dieser gelagert werden. Das Werkwerkzeug kann dann einem äußeren Widerstand, z.B. einem Hindernis nach Art einer Rinnsteinkante, nachgebend ausweichen; dadurch werden das Werkzeug bzw. dessen Borsten geschont und das jeweilige Hindernis wird nicht unnötig verkratzt.

Für die Lagerung radial beweglich auf der Kippachse kann das Werkzeug mit einem von der Arbeitsseite abgewendeten Führungsteil am Hinterende längsverschiebbar in einer Hülse aufgenommen werden. Die Rückstellkraft soll dann, bevorzugt als Druckfeder, auf das Hinterende wirken. Vorzugsweise soll die Druckfeder (oder dergleichen Rückstellkraft) so ausgebildet und gelagert werden, daß sie zwei Aufgaben erfüllt: Einerseits soll sie eine Kraft in Werkzeug- bzw. Hülsenlängsrichtung ausüben, die ein Ausweichen (Nachgeben) des Werkzeugs bei schädlichem Anstoßen - schädlich für Werkzeug und/oder Hindernis -an ein Hindernis zuläßt. Andererseits soll die als Rückstellmittel eingesetzte Druckfeder so ausgebildet und gelagert werden, daß auf das Werkzeug - an dessen Hinterende - auch eine Kraft tangential in Bezug auf die Kippachse ausüben kann. Diese tangentiale Kraft soll so austariert werden, daß die Arbeitsseite des Werkzeugs bei ruhender sowie anlaufender Maschine deutlich vom Boden abgehoben ist.

Da der Borstenarm bei Rotation der Werkzeugwelle automatisch im wesentlichen parallel zur Bodenfläche gleitet, wird er durch Unebenheiten dieser Fläche leicht ausgelenkt, er kann daher eventuellen Hindernissen elastisch ausweichen.

Das Borstenende des erfindungsgemäßen Reinigungswerkzeugs kann in einem bevorzugten Ausführungsbeispiel aus einem mehradrigen Drahtseilstück bzw. -ende bestehen. Das Drahtseilstück soll so ausgewählt werden, daß es bei der ersten Anwendung der Vorrichtung am freien Ende pinselartig aufgefächert und dadurch funktionsfähig betreffend die Reinigungsaufgabe wird. Grundsätzlich kann anstelle des Drahtseilstücks auch ein Kunststoffseilstück oder anderweitige Bürste verwendet werden. Das jeweilige Bürstenteil ist im allgemeinen ein Verschleißteil, es kann daher gesondert ausgetauscht werden.

Vorzugsweise wird das Drahtseilstück mit Hilfe mindestens eines bei Betrieb des Werkzeugs ebenso wie dessen Teile abnutzenden Blechrings abgebunden. In der bisherigen Praxis reichten zwei solcher Ringe aus. Die Ringe nutzen zwar zugleich mit der Arbeitsseite des Werkzeugs ab, zugleich verhindern sie aber, daß das Werkzeug weiter - gesehen in Werkzeuglängsrichtung - aufgefächert wird als für den normalen Betrieb erforderlich.

Ein erfindungsgemäß vorgesehener Träger wird an der Werkzeugwelle bevorzugt symmetrisch in Bezug auf die Welle bzw. deren Achse befestigt. Auch der Antrieb des Trägers erfolgt bevorzugt unmittelbar durch bzw. über die bei Betrieb rotierende Werkzeugwelle. Für einen ruhigen Lauf der Vorrichtung kann es günstig sein, den Träger allein oder bevorzugt zusammen mit dem jeweiligen Arbeitswerkzeug zu wuchten.

Grundsätzlich kann der erfindungsgemäß vorgesehene Träger im Prinzip wie das Messer eines Rasenmähers ausgebildet werden. An den Längsenden dieses Trägers werden (anstelle der Messer) im Fall der Erfindung nicht Schneiden sondern Halterungen, z.B. Kipp- oder Schwenklager, für je mindestens ein Arbeitswerkzeug vorgesehen. Im Grundsatz kann ein Träger mit zwei diametral gegenüberliegenden Armen ausreichen. Es liegt auch im Rahmen der Erfindung, einen Träger mit drei oder mehr - bevorzugt symmetrisch verteilten - Armen vorzusehen. Im Prinzip kann der Träger auch wie eine Kreisscheibe ausgebildet werden. Ein symmetrischer Aufbau des Trägers mit den daran befestigten Teilen ist vorteilhaft, wenn ein ruhiger Rundlauf der Werkzeugwelle erreicht werden soll.

Im Rahmen der Erfindung wird der Träger bevorzugt insgesamt etwa horizontal rotierbar gelagert, derart, daß das einzelne rotierende Arbeitswerkzeug die Bodenfläche während des ganzen Trägerumlaufs - etwa tangential, das heißt in einer Umlaufrichtung längs der Bodenfläche - bearbeitet. Das abgeschlagene Wildkraut wird gegebenenfalls längs der Bodenfläche weggeschleudert, es kann anschließend gesondert, z.B. mit einer Kehrmaschine, eingesammelt werden.

In einer anderen Ausgestaltung wird der Träger insgesamt schräg auf der (vertikalen) Werkzeugwelle gelagert, so daß das einzelne mitlaufende Arbeitswerkzeug die Bodenfläche nur auf einem Teil des Umlaufs, vorzugsweise auf weniger als dem halben Umlauf, bearbeitet. Das einzelne Arbeitswerkzeug wird dann immer noch annähernd parallel zur Bodenfläche auf einem Kreis herumbewegt, aber es bearbeitet die Bodenfläche nur auf einem Teil des Kreises. Gegebenenfalls wird das abgeschlagene Wildkraut durch die Bewegung des schräg gestellten Trägers vom Boden abgehoben, und es kann dann in einen entsprechend schräg gestellten Sammelkanal - durch den hindurch der Träger mit dem jeweiligen Arbeitswerkzeug rotiert - aufgefangen und unmittelbar einem Sammelbehälter zugeführt werden.

Bei der erfindungsgemäßen Lösung mit schräg in Bezug auf die Werkzeugwelle gestelltem Träger soll der Träger vorzugsweise nicht taumeln sondern die Schrägstellung soll räumlich im wesentlichen fest sein. Das hat den Vorteil, daß die Arbeitswerkzeuge immer in einem räumlich festen Winkelbereich in Bezug auf die Vorrichtung bzw. deren Bedienungsperson an der Bodenfläche entlangstreichen und daß das abgeschlagene Wildkraut immer im räumlich selben Umgangsbereich des Trägers von der Bodenfläche abgehoben und einem Sammelkanal zugeführt werden kann. Wenn ein solcher Träger durch die Werkzeugwelle unmittelbar angetrieben werden soll, wird er zweckmäßig in einer Art Schulterlager von der Werkzeugwelle aufgenommen. Ein solches Schulterlager ermöglicht eine räumlich feststehende Schräglage des gegebenenfalls mit der Welle rotierenden Trägers. Der Träger kann über einen Mitnehmer mit der Welle gekoppelt sein. Bei einer Umdrehung der Werkzeugwelle wird also ein bestimmtes Umfangselement des mitrotierenden Trägers auf einem - wie der Träger - schräg in Bezug auf die Achse der Werkzeugwelle stehenden Kreis geführt. Die Schrägstellung des Trägers (in Bezug auf die Werkzeugwelle) kann dadurch stabilisiert werden, daß das Arbeitswerkzeug in einem räumlich festen Umfangsbereich (des Trägers) auf einer Prallfläche entlangstreicht, welche Teil des Sammelkanals ist.

Die erfindungsgemäße Vorrichtung wird vorzugsweise mit einem den bei Betrieb rotierenden Träger mit Arbeitswerkzeug oben und rundum im Prinzip glockenförmig abdeckenden Gehäuse ausgestattet. Das Gehäuse kann auch ein Fahrwerk der Vorrichtung umschließen. Das Gehäuse schützt davor, daß vom Boden oder vom rotierenden Werkzeug selbst abgelöste Teile in die Umgebung abgeschleudert werden. Wie gesagt, kann das Gehäuse auch mit einem Sammelkanal usw. für das abgeschlagene Wildkraut ausgestattet werden.

Das Fahrwerk wird - z.B. zur vereinfachten Lenkung - bevorzugt mit drei oder vier Rollen bzw. Rädern ausgestattet. Dabei kann eine der Rollen in der Mitte in Transportrichtung vor dem Schwenkkreis der Arbeitswerkzeuge positioniert werden, während ein Rollenpaar in Transportrichtung hinter dem Schwenkkreis stehen soll. Das Rollenpaar kann symmetrisch oder unsymmetrisch in Bezug auf die durch die Achse der Werkzeugwelle gehende Fluchtlinie der vorgesehenen Vorschubrichtung der Vorrichtung positioniert werden.

Der Radstand des Fahrwerks bzw. die Position der einzelnen Räder des Fahrwerks sollen so gewählt werden, daß der durch die Arbeitswerkzeuge bestrichene Bearbeitungskreis - speziell bei einem insgesamt in einer horizontalen Ebene rotierbaren Träger - zumindest auf einer Seite der Vorrichtung bzw. einseitig über die Räder (Radspur) übersteht. Dadurch wird erreicht, daß der Bearbeitungskreis einer nahe an einen Rinnstein heranfahrenden Vorrichtung bis in die Kante zwischen Bodenfläche und Rinnstein reichen und die Borsten in diese Kante eingreifen sowie dort Wildkraut entfernen können.

Das die Arbeitswerkzeuge und Rollen überdeckende Gehäuse kann, zumindest an der dem Boden zugewandten Seite, im wesentlichen rechteckig bis quadratisch aber auch in beliebiger anderer Form ausgebildet werden. Gemäß weiterer Erfindung wird wenigstens ein Seitenteil des Gehäuses als - vorzugsweise um eine horizontale Klappachse nach oben, insbesondere gegen die Schwerkraft oder gegen eine Federkraft - schwenkbare Gehäuseklappe ausgebildet, die auch in ihrer aus der Glockenform weggeschwenkten Position gegen Steinschlag schützt. Unter dem Begriff Steinschlag" werden Teile, insbesondere Steine, verstanden, die durch erfindungsgemäßes Betätigen der Arbeitswerkzeuge zur Seite - von der erfindungsgemäßen Vorrichtung weg - geschleudert werden. Auch einige Verbesserungen und weitere Ausgestaltungen dieses Teils der erfindungsgemäßen Lösung werden in den Unteransprüchen beschrieben.

Die erfindungsgemäße Gehäuseklappe kann beispielsweise zur Seite oder nach oben klappbar ausgebildet werden. Auf jeden Fall soll der Abstand der jeweiligen Klappachse oder dergleichen von der Werkzeugwelle kleiner als der Arbeitsradius der Arbeitswerkzeuge sein. Dadurch wird erreicht, daß nach Wegschwenken der Gehäuseklappe die Arbeitswerkzeuge nicht mehr durch das Gehäuse daran gehindert werden, in eine Rinnsteinkante oder dergleichen Kehle einzugreifen. Der Wegfall dieser eventuellen Behinderung ist aber nur ein Teil dieses erfindungsgemäßen Aspekts. Hinzu kommt nämlich der gleichzeitig erhaltene Schutz gegen Steinschlag.

Die Gehäuseklappe wird nämlich nicht irgendwie, sondern so weggeschwenkt, daß sie eventuell durch die Arbeitswerkzeuge weggeschleuderte Steine auch in der aus dem Arbeitsbereich in einer Rinnsteinkehle heraus bewegten Position weiterhin auffängt. Vorzugsweise wird die Gehäuseklappe zu diesem Zweck auf einer horizontalen Klappachse gelagert und bei Bedarf nach oben angehoben und auf die Oberkante des Hindernisses, z.B. des Rinnsteins einer Bürgersteigkante, aufgelegt. Wenn dann in die Richtung der abgehobenen Gehäuseklappe ein Stein geschleudert wird, fliegt er entweder gegen den Rinnstein oder gegen die darüber befindliche Gehäuseklappe; der Stein kann also die Umgebung nicht gefährden.

Die (nach unten gerichteten) Längskanten der Gehäuseklappe können - gesehen in Transportrichtung - kufenartig ausgebildet werden, so daß die Gehäuseklappe sich beim Fahren gegen einen Kantstein von selbst auf das jeweilig obere Niveau hebt. Beim Verlassen des Kantsteins wird die Gehäuseklappe bevorzugt von selbst, z.B. durch die Federkraft und/oder Schwerkraft, wieder in die Normalposition nach unten geschwenkt.

Die beim Anheben der Gehäuseklappe gegebenenfalls an deren Längsenden frei werdenden Öffnungen können, wenn auch an diesen Stellen ein Herausschleudern von Gegenständen ausgeschlossen werden soll, durch herabhängende Lappen, insbesondere Gummilappen mit versteifendem Gewicht, z.B. eingebettete Metallschiene, geschlossen werden. Auch an den übrigen unteren Kanten des Gehäuses, die der jeweiligen Bodenfläche zugewandt sind, können bis zum Boden reichende Schutzmittel gegen ein Herausschleudern von Gegenständen vorgesehen werden. Bewährt haben sich einfache oder doppelte Bürstenleisten, deren Borsten auf den Boden gerichtet sind, vorzugsweise sollen die freien Borstenenden den Boden leicht berühren. Für einen noch besseren Schutz gegen Steinschlag können die Bürstenleisten mit sich längs der Leisten erstreckenden elastischen Bändern kombiniert oder durch solche Bänder ersetzt werden.

Zum Reinigen größerer Flächen können auch zwei oder mehr erfindungsgemäße Vorrichtungen nebeneinander oder versetzt an einen Schlepper oder dergleichen wie bei einem Großflächenrasenmäher vereinigt werden.

Anhand der schematischen Zeichnung von Ausführungsbeispielen werden einige Einzelheiten der Erfindung erläutert. Es zeigen:
- **Fig. 1**: einen vertikalen Schnitt parallel zur Vorschubrichtung einer erfindungsgemäßen Vorrichtung mit durch Fliehkraft gesteuerten Arbeitswerkzeugen;
- **Fig. 2**: die Vorrichtung nach Fig. 1 im vertikalen Schnitt senkrecht zur Vorschubrichtung;
- **Fig. 3**: eine erfindungsgemäße Vorrichtung mit insgesamt schräg gestellt auf der Werkzeugwelle rotierendem Träger des jeweiligen Arbeitswerkzeugs; und
- **Fig. 4**: Teilzeichnung der Werkzeugaufhängung.

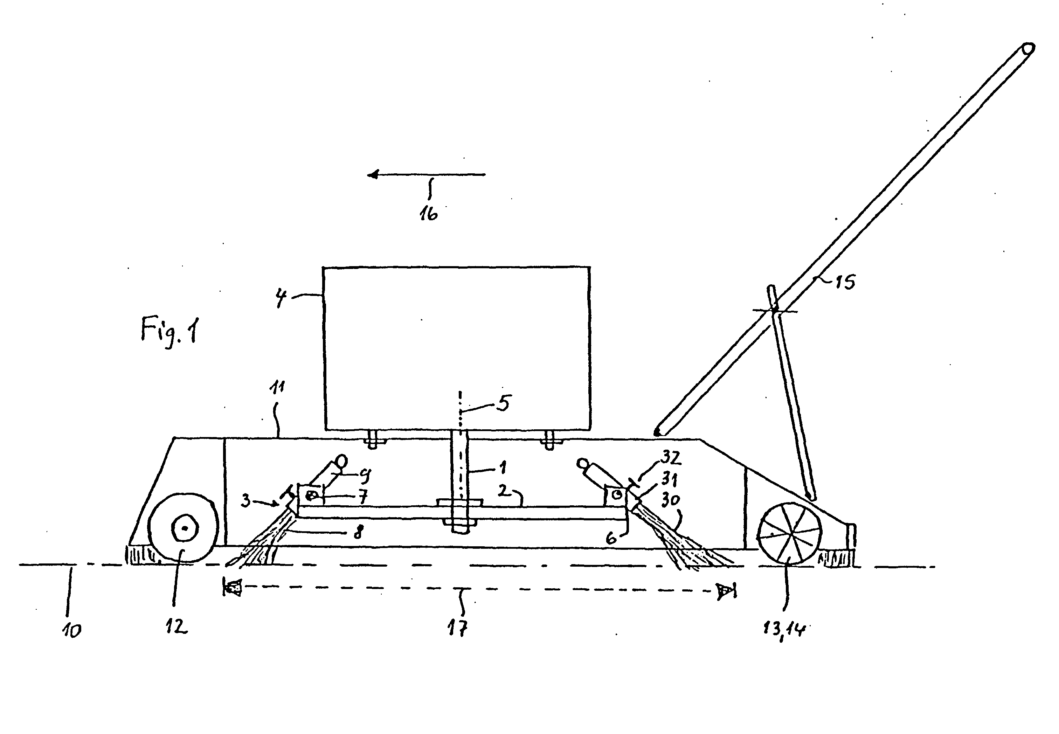

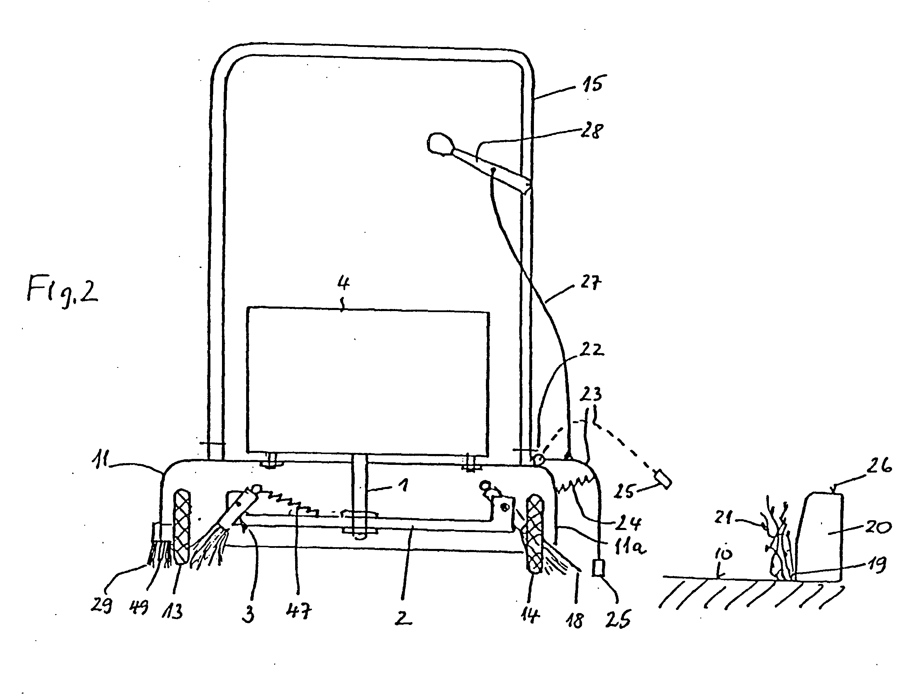

Die Bodenbearbeitungsmaschine zur Wildkrautbeseitigung nach Fig. 1 und 2 urnfaßt einen auf einer bei Betrieb rotierbaren Werkzeugwelle 1 befestigten Träger 2 mit daran angebrachten Arbeitswerkzeugen 3. Der Träger 2 soll unverdrehbar und insgesamt in einer horizontalen Ebene rotierbar auf der Werkzeugwelle 1 fixiert werden. Die Werkzeugwelle 1 kann die Abtriebswelle eines Motors 4 sein.

Bei diesem bevorzugten Ausführungsbeispiel wird der Träger an einer etwa vertikal nach unten gerichteten Werkzeugwelle 1 symmetrisch in Bezug auf deren Achse 5 befestigt. Er besitzt an seiner Peripherie 6 mindestens zwei auf etwa horizontalen Achsen, den Kippachsen 7, gelagerte Werkzeuge 3 und wird insgesamt in Bezug auf die Achse 5 gewuchtet. Jedes Werkzeug 3 nach Fig. 1 und 2 wird durch seine Kippachse 7 in einen Borstenarm 8 und einen Gewichtsarm 9 unterteilt. An letzterem können irgendwelche Rückstellmittel - sogenannte Borstenheber 47 - angreifen, die den Borstenarm 8 bei ruhender Welle 1 vom Boden abheben. Als Rückstellmittel kommen beispielsweise elastische Zugfedern oder (von oben auf den Gewichtsarm drückende) Blattfedern in Frage; die Blattfedern können z.B. aus Stahl bestehen oder als Gummiprofil ausgebildet sein.

Vorzugsweise besteht der Träger 2 aus einem einzigen propellerartigen Doppelarm, dessen Längsenden - in Bezug auf die Werkzeugwelle 1 diametral gegenüberliegend - je eine der Werkzeuge 3 tragen. Der Doppelarm wird gemäß Fig. 1 und 2 mit seinem auf die jeweilige Bodenfläche 10 einwirkenden Werkzeuge 3 mit einem Gehäuse 11 (oben und rundum) überdeckt, das auch ein Fahrwerk, z.B. mit drei oder vier Rädern bzw. Rollen 12 - 14, verdeckt. Am Gehäuse 11 kann ein Haltebügel 15 angebracht werden, der es erlaubt, die Vorrichtung in der jeweiligen Vorschubrichtung 16 zu führen.

Der durch die Werkzeuge 3 bestrichene Bearbeitungskreis 17 kann zumindest an einer ausgeschnittenen Längsseite 11a des Gehäuses 11 über die dort befindliche Rolle 14 bzw. die zugehörige Radspur hinausreichen. Dadurch wird es möglich, daß die Borstenspitzen 18 des Borstenarms 8 in die Kante 19 am Rande eines Rinnsteins 20 eingreifen und dort befindliches Wildkraut 21 bis an die Wurzel abschlagen. Wenn bei dieser Arbeit das Gehäuse 11 stört, kann es an einer Seite, an der der Bearbeitungskreis 17 seitlich über ein Rad 14 übersteht, mit einer beispielsweise um eine etwa horizontale Klappachse 22 schwenkbaren (auch als Schutzblech bezeichneten) Gehäuseklappe 23 ausgestattet werden. Die Gehäuseklappe 23 übergreift also gegebenenfalls die ausgeschnittene Längsseite 11a des Gehäuses 11. Sie kann, bevorzugt gegen die Schwerkraft oder gegen eine Federkraft 24, nach oben geschwenkt werden - wie gestrichelt dargestellt -, so daß die beispielsweise als Kunststoffkufe 25 ausgebildete Unterkante der Gehäuseklappe 23 auf die Oberseite 26 des Rinnsteins 20 bzw. der daran angrenzenden Fläche anzuheben ist. Zum willkürlichen Anheben der Gehäuseklappe 23 kann dieser ein Zugseil 27 mit Stellhebel 28 am Haltebügel 15 zugeordnet werden.

In der Position auf der Rinnstein-Oberseite 26 ist das Gehäuse 11 offen in Richtung auf den Rinnstein 20. Dieser schützt dort jedoch (zusammen mit der angehobenen Gehäuseklappe 23) die Umgebung vor abgeschleuderten Gegenständen. Am übrigen Umfang der Unterkante des Gehäuses 11 können zum Schutz der Umgebung Bürstenleisten 29 und Gummistreifen 49 angebracht werden.

Der Borstenteil 30 des Borstenarms 8 wird im allgemeinen als Verschleißteil ausgebildet. Dieses kann beispielsweise in einer Hülse 31 des Borstenarms 8 mit Hilfe einer Klemmschraube 32 oder durch Einhaken arretiert werden. Das Werkzeug 3 kann, alternativ um, wie oben erläutert, den Bürstenverschleiß zu minimieren, axial, das heißt in seiner Längsrichtung, frei beweglich - z.B. um etwa 15 bis 20 mm - gelagert und ein- oder zweimal mittels Blechring abgebunden werden. Einzelheiten hierzu werden in der Ausschnittdarstellung von Fig. 4 im Prinzip gezeichnet. Das Werkzeug 3 besitzt ein Arbeitsende 51, ein Führungsteil 52 und ein Hinterende 53. Das Arbeitsende 51 gleitet mit seiner nach kurzer Betriebszeit abgeflacht aufgefächerten Arbeitsfläche 54 über die zu bearbeitende Bodenfläche 10. Das Führungsteil 52 wird in Längsrichtung 55 des Werkzeugs 3 beweglich in einer Hülse 56 aufgenommen. Die Klemmschraube 32 von Fig. 1 entfällt dann. Die Hülse 56 wiederum wird schwenkbar auf der Kippachse 7 gehalten. Auf das Hinterende 53 wirkt eine Druckfeder 57, die an einem Ständer 59, der z.B. am Träger 2 befestigt sein kann, gelagert ist. Die Druckfeder 57 soll so ausgebildet sein, daß sie Kräfte in der Längsrichtung 55 und in der Tangentialrichtung 58 (das heißt in Umfangsrichtung der Achse 7) elastisch auffangen kann. Das Ausführungsbeispiel zeigt auch zwei Blechringe 60 auf dem Arbeitsende 51 des Werkzeugs 3.

In dem bevorzugten Ausführungsbeispiel nach Fig. 1 und 2 wird die Position des auf einer horizontalen Kippachse 7 auf dem rotierenden Träger 2 gelagerten Arbeitswerkzeugs 3 allein durch die Massenverteilung im einzelnen Werkzeug 3 selbst - also durch Fliehkraft - bestimmt. Wenn der Borstenarm 8 schwerer als der Gewichtsarm 9 ist, wird der Borstenarm 8 durch die Fliehkraft leicht vom Boden abgehoben, so daß das Abschlagen des Wildkrauts ohne Aufrauhung der Bodenfläche erfolgt. Dieses Ausführungsbeispiel wird daher im Rahmen der Erfindung bevorzugt.

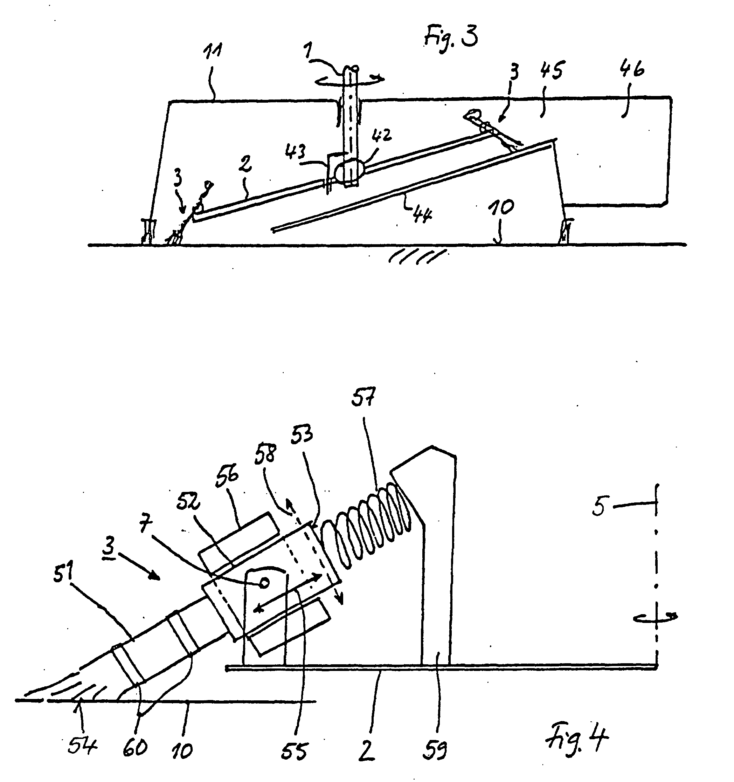

Die Träger 2 werden in den Ausführungsbeispielen nach Fig. 1 und 2 fest mit der Werkzeugwelle 1 so verbunden, daß der einzelne Träger insgesamt etwa in einer horizontalen Ebene rotiert wird, wenn sich die Welle 1 dreht. Im Ausführungsbeispiel nach Fig. 3 wird der Träger 2 beim Rotieren insgesamt schräg in Bezug auf die Werkzeugwelle 1 gestellt, so daß das einzelne mitlaufende Arbeitswerkzeug 3 die Bodenfläche 10 nur auf einem Teil des zugehörigen Umlaufkreises bearbeitet. Eine weitere Besonderheit nach Fig. 3 besteht darin, daß der Werkzeugträger 2 in einem sogenannten Schulterlager 42 auf der Welle 1 gelagert wird. Durch das Schulterlager 42 und einem mit der Welle 1 verbundenen Mitnehmer 43 wird erreicht, daß der bei Drehung der Welle 1 rotierende Träger 2 nicht taumelt, sondern die in Fig. 3 dargestellte Schräglage - räumlich gesehen - im wesentlichen konstant beibehält.

Mit Hilfe des schräg gestellten Trägers 2 nach Fig. 3 können mit dem Arbeitswerkzeug 3 abgeschlagene Wildkräuter 21 von der Bodenfläche 10 abgehoben und über eine im Gehäuse 11 vorgesehene Prallfläche 44 einem Sammelkanal 45 und von dort aus einem Sammelbehälter 46 zugeführt werden.

### Bezugszeichenliste:

- 1 =: Werkzeugwelle
- 2 =: Träger
- 3 =: Arbeitswerkzeug
- 4 =: Motor
- 5 =: Achse (1)
- 6 =: Peripherie (2)
- 7 =: Kippachse
- 8 =: Borstenarm
- 9 =: Gewichtsarm
- 10 =: Bodenfläche
- 11 =: Gehäuse
- 12-14 =: Rollen
- 15 =: Haltebügel
- 16 =: Vorschubrichtung
- 17 =: Bearbeitungskreis
- 18 =: Borstenspitze
- 19 =: Rinnsteinkante
- 20 =: Rinnstein
- 21 =: Wildkraut
- 22 =: Klappachse
- 23 =: Gehäuseklappe
- 24 =: Feder
- 25 =: Kunststoffkufe
- 26 =: Oberseite (20)
- 27 =: Zugseil
- 28 =: Schalthebel
- 29 =: Bürstenleiste
- 30 =: Borstenteil (8)
- 31 =: Hülse
- 32 =: Klemmschraube
- 42 =: Schulterlager
- 43 =: Mitnehmer
- 44 =: Prallfläche
- 45 =: Sammelkanal
- 46 =: Sammelbehälter
- 47 =: Borstenarmheber (Fig. 2)
- 49 =: Gummistreifen
- 51 =: Arbeitsende (3)
- 52 =: Führungsteil
- 53 =: Hinterende (3)
- 54 =: Arbeitsfläche (51)
- 55 =: Längsrichtung
- 56 =: Hülse
- 57 =: Druckfeder
- 58 =: Ständer
- 59 =: Transportrichtung
- 60 =: Blechring

## Patentansprüche

1. Vorrichtung zum mechanischen Abtragen von Wildkraut (21) von befestigten Bodenflächen (10), wie Wegen, Straßen, Plätzen oder Rinnen, mit mindestens einem um eine etwa vertikale Werkzeugwelle (1) rotierend auf die Bodenfläche (10) einwirkenden, durch Ausnutzung der Fliehkraft relativ zur Bodenfläche (10) positionierten Arbeitswerkzeug (3), welches an der Peripherie eines mit der Werkzeugwelle (1) rotierbaren Trägers (2) auf einer etwa horizontalen Kippachse (7) schwenkbar gelagert ist, wobei die Arbeitswerkzeuge (3) insgesamt zusammen mit dem Träger - in Bezug auf die Welle (1) - gewuchtet gelagert sind, und **dadurch gekennzeichnet, daß** jedes Arbeitswerkzeug (3) durch seine Kippachse (7) in einen Borstenarm (8) und einen Gewichtsarm (9) unterteilt ist.

2. Vorrichtung nach Anspruch 1, **dadurch gekennzeichnet, daß** der Gewichtsarm (9) leichter als der Borstenarm (8) ist und daß das einzelne Arbeitswerkzeug (3) so auf dem Träger (2) gelagert ist, daß es infolge der Fliehkraft über die Bodenfläche (10) gleitet (Fig. 1 und 2).

3. Vorrichtung nach Anspruch 1 oder 2, **dadurch gekennzeichnet, daß** das Arbeitswerkzeug (3) mit einem, vorzugsweise abgebundenem (60), Drahtseilstück (51) als Borstenteil ausgebildet ist.

4. Vorrichtung nach mindestens einem der Ansprüche 1 bis 3, **dadurch gekennzeichnet, daß** der Träger (2) beim Rotieren insgesamt schräg auf der Werkzeugwelle (1) gestellt ist, so daß das einzelne mitlaufende Arbeitswerkzeug (3) die Bodenfläche (10) nur auf einem Teil - vorzugsweise auf weniger als dem halben Umlauf - bearbeitet (Fig. 4).

5. Vorrichtung nach mindestens einem der Ansprüche 1 bis 4, **dadurch gekennzeichnet, daß** der Bearbeitungskreis (17) der bei Betrieb rotierenden Arbeitswerkzeuge (3) - gegebenenfalls einschließlich Fahrwerk (12-14) - oben und rundum mit Hilfe eines im Prinzip glockenförmigen Gehäuses (11) überdeckt ist und daß wenigstens ein Seitenteil des Gehäuses (11) als schwenkbare Gehäuseklappe (23) ausgebildet ist, die auch in ihrer weggeschwenkten Position gegen Steinschlag schützt.

6. Vorrichtung nach Anspruch 5, **gekennzeichnet durch** ein Fahrwerk (13, 14), dessen Radstand einseitig enger als der Durchmesser des **durch** das jeweilige Arbeitswerkzeug (3) bestrichenen Bearbeitungskreises (17) ist bzw. asymmetrisch in Bezug auf den Bearbeitungskreis (17) liegt.

7. Vorrichtung nach Anspruch 5 oder 6, **dadurch gekennzeichnet, daß** die Gehäuseklappe (23) um eine etwa horizontale Klappachse (22) nach oben, insbesondere gegen die Schwerkraft oder gegen die Kraft einer Feder (24), schwenkbar ist, wobei der Abstand der Klappachse (22) von der Werkzeugwelle (1) kleiner als der Radius des Bearbeitungskreises (17) der Arbeitswerkzeuge (3) ist.

8. Vorrichtung nach mindestens einem der Ansprüche 5 bis 7, **dadurch gekennzeichnet, daß** das Gehäuse (11) an seinen der Bodenfläche (10) zugewandten unteren Kanten mit einfachen oder doppelten, insbesondere mit Gummileisten (49) kombinierten Bürstenleisten (29), deren Borsten bzw. Kanten auf den Boden (10) gerichtet sind, ausgestattet ist.

9. Vorrichtung nach mindestens einem der Ansprüche 1 bis 8, **dadurch gekennzeichnet, daß** das einzelne Arbeitswerkzeug (3) eine solche Lagerung bzw. Gewichtsverteilung besitzt, daß das Borstenteil (30) bei Rotieren der Werkzeugwelle (1) praktisch ohne Druck über die Bodenfläche (10) gleitet, aber bei Ruhen der Werkzeugwelle (1) durch eine Zusatzkraft (47) von der Bodenfläche (10) abgehoben ist.

10. Vorrichtung nach mindestens einem der Ansprüche 1 bis 9, **dadurch gekennzeichnet, daß** das Arbeitswerkzeug (3) in seiner Längsrichtung (55) frei beweglich in einer Führung (56) auf der Kippachse gelagert ist und daß auf sein dem Arbeitsende (51) gegenüberliegendes Hinterende (53) eine insbesondere auch in der Umfangsrichtung (59) der Achse (7) wirksame Rückstellkraft (57) gerichtet ist.

## Claims

1. An apparatus for the mechanical removal of weeds (21) from paved ground areas (10), such as paths, streets, squares or gulleys, having at least one working tool (3) that rotates around a roughly vertical tool shaft (1), acts on the ground area (10) and is positioned in relation to the ground area (10) by utilising the centrifugal force, and that is pivoted on a roughly horizontal tilting axle (7) at the periphery of a beam (2) that can rotate with the tool shaft (1),
wherein the working tools (3) are overall mounted balanced together with the beam - with respect to the shaft (1),
**characterised in that** each working tool (3) is divided by its tilting axle (7) into a bristle arm (8) and a weight arm (9).

2. An apparatus according to Claim 1,
**characterised in that** the weight arm (9) is lighter than the bristle arm (8)
and **in that** the individual working tool (3) is mounted on the support (2) so that it slides over the ground area (10) as a result of the centrifugal force (Figures 1 and 2).

3. An apparatus according to Claim 1 or 2,
**characterised in that** the working tool (3) is constructed as a bristle part with a preferably tied (60), wire cable piece (51).

4. An apparatus according to at least one of Claims 1 to 3,
**characterised in that** the beam (2) is overall placed diagonally to the tool shaft (1) during rotation so that the individual moving working tool (3) works the ground area (10) only on one part - preferably over less than half of the revolution (Figure 4).

5. An apparatus according to at least one of Claims 1 to 4,
**characterised in that** the sphere of operation (17) of the working tools (3) rotating during operation - possibly including chassis (12-14) - is covered at the top and around it by means of a fundamentally bell-shaped housing (11)
and **in that** at least one side part of the housing (11) is constructed as a pivoting housing flap (23), which also provides protection against stone rock strike even in its swivelled-away position.

6. An apparatus according to Claim 5,
**characterised by** a chassis (13, 14), the wheelbase of which is narrower on one side than the diameter of the sphere of operation (17) covered by the respective working tool (3) and lies asymmetrically with respect to the sphere of operation (17).

7. An apparatus according to Claim 5 or 6,
**characterised in that** the housing flap (23) can pivot upwards around a horizontal tilting axis (22), in particular against the gravitational force or against the force of a spring (24), the distance of the tilting axis (22) from the tool shaft (1) being less than the radius of the sphere of operation (17) of the working tools (3).

8. An apparatus according to at least one of Claims 5 to 7,
**characterised in that** the housing (11) is equipped at its lower edges facing the ground area (10) with single or double brush strips (29), in particular combined with rubber strips (49), the bristles and edges of which are centred on the ground (10).

9. An apparatus according to at least one of Claims 1 to 8,
**characterised in that** the individual working tool (3) has such a bearing or weight distribution that, as the tool shaft (1) rotates, the bristle part (30) slides virtually without any pressure over the ground area (10), but when the tool shaft (1) is at rest it is raised from the ground area (10) by an additional force (47).

10. An apparatus according to at least one of Claims 1 to 9,
**characterised in that** the working tool (3) in its longitudinal direction is mounted with freely mobility in a guide (56) on the tilting axle
and **in that** a restoring force (57) that acts in particular also in the peripheral direction (59) of the axle (7) is centred on its rear end (53) opposite the working end (51).

## Revendications

1. Dispositif pour enlever mécaniquement des mauvaises herbes (21) de surfaces fixées au sol (10), comme des voies, des routes, des places ou des caniveaux, avec au moins un outil de travail (3) positionné de façon relative par rapport à la surface fixée au sol (10) de par l'utilisation de la force centrifuge, agissant sur la surface fixée au sol (10), tournant autour d'un arbre de l'outil (1) à peu près vertical et logé, de façon pivotante, sur un axe d'inclinaison (7) à peu près horizontal, au niveau de la périphérie d'un support (2) qui peut tourner avec l'arbre de l'outil (1), sachant que tous les outils de travail (3), équilibrés par rapport à l'arbre (1), sont logés conjointement avec le support, **caractérisé en ce que** chaque outil de travail (3) est scindé par son axe d'inclinaison (7) en un bras avec des poils de brosserie (8) et un bras de charge (9).

2. Dispositif selon la revendication 1, **caractérisé en ce que** le bras de charge (9) est plus léger que le bras avec des poils de brosserie (8) et **en ce que** chaque outil de travail (3) est logé sur le support (2), de sorte que la force centrifuge le fait glisser sur la surface fixée au sol (10) (figures 1 et 2).

3. Dispositif selon la revendication 1 ou 2, **caractérisé en ce que** l'outil de travail (3), muni d'une pièce de câbles métalliques (51), de préférence ficelée (60), est conçu en tant qu'élément avec des poils de brosserie.

4. Dispositif selon au moins l'une quelconque des revendications 1 à 3, **caractérisé en ce que** tout le support (2) est, lors de la rotation, incliné sur l'arbre de l'outil (1), de sorte que chaque outil de travail (3) tournant traite la surface fixée au sol (10) uniquement sur une partie, de préférence sur moins que la moitié du tour (figure 4).

5. Dispositif selon au moins l'une quelconque des revendications 1 à 4, **caractérisé en ce que** le cercle de traitement (17) des outils de travail (3) tournant en fonctionnement, le cas échéant y compris le dispositif de roulement (12-14), est couvert au-dessus et tout autour à l'aide d'une carcasse en principe en forme de cloche (11) et **en ce qu'**au moins, une partie latérale de la carcasse (11) est conçue en tant que volet de carcasse orientable (23) qui protège également, en position de pivotement, des jets de pierres.

6. Dispositif selon la revendication 5, caractérisé en un dispositif de roulement (13, 14) dont l'empattement est d'un côté plus étroit que le diamètre du cercle de traitement (17) balayé par chaque outil de travail (3) ou plus précisément asymétrique par rapport au cercle de traitement (17).

7. Dispositif selon la revendication 5 ou 6, **caractérisé en ce que** le volet de la carcasse (23) peut être orienté vers le haut, pivotant autour d'un axe du volet (22) à peu près horizontal, en particulier contre la force de gravité ou contre la force d'un ressort (24), sachant que l'espacement entre l'axe du volet (22) et l'arbre de l'outil (1), est plus petit que le rayon du cercle de traitement (17) des outils de travail (3).

8. Dispositif selon au moins l'une quelconque des revendications 5 à 7, **caractérisé en ce que** les côtés inférieurs de la carcasse (11), orientés vers la surface fixée au sol (10), présentent des portes-brosses (29) simples ou doubles, en particulier combinés à des bordures en caoutchouc (49) et dont les poils de brosserie ou plus précisément les bords, sont dirigés sur le sol (10).

9. Dispositif selon au moins l'une quelconque des revendications 1 à 8, **caractérisé en ce que** chaque outil de travail (3) possède une telle disposition ou plus précisément, une telle répartition de poids que l'élément avec des poils de brosserie (30) glisse pratiquement sans pression sur la surface fixée au sol (10) lorsque l'arbre de l'outil (1) tourne, mais, est décollé de la surface fixée au sol (10) par une force supplémentaire (47) lorsque l'arbre de l'outil (1) est arrêté.

10. Dispositif selon au moins l'une quelconque des revendications 1 à 9, **caractérisé en ce que** l'outil de travail (3), dans son sens longitudinal (55), est logé de façon mobile dans un guide (56) sur l'axe d'inclinaison et **en ce qu'**une force de rappel (57) active, en particulier aussi dans le sens de la circonférence (59) de l'axe (7), est dirigée sur son extrémité arrière (53) opposée à l'extrémité de travail (51).
